(19) Europäisches Patentamt

European Patent Office

Office européen des brevets

(11) **EP 1 059 744 A2**

(12) **EUROPÄISCHE PATENTANMELDUNG**

(43) Veröffentlichungstag:
**13.12.2000 Patentblatt 2000/50**

(51) Int. Cl.$^7$: **H04B 10/155**

(21) Anmeldenummer: **00110647.5**

(22) Anmeldetag: **18.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.06.1999 DE 19926124**

(71) Anmelder:
**SIEMENS AKTIENGESELLSCHAFT**
**80333 München (DE)**

(72) Erfinder:
• **Rosenkranz, Werner, Professor**
 **24235 Laboe (DE)**
• **Wichers, Maike**
 **24143 Kiel (DE)**

(54) **Anordnung zur Modulierung eines optischen Signals mit Hilfe eines Mach-Zehnder Modulators**

(57) Ein eine Ansteuerelektrode (AE) aufweisender Single-Drive Mach-Zehnder Modulator (MZM) ist über einen Steuereingang (SE) mit dem Ausgang (AD, AF) eines Codierers (COD) zur Umwandlung eines binären Eingangssignals (ds$_k$) in ein mehrstufiges Signal (ss) verbunden. Ein an den Single-Drive Mach-Zehnder Modulator (MZM) herangeführtes, optisches Signal (os) wird in Abhängigkeit des mehrstufigen Signals (ss) mehstufig moduliert. Vorteilhaft wird eine Reduzierung des technischen und somit wirtschaftlichen Aufwands bei der Realisierung von Schaltungen zur Partial-Response-Modulation optischer Signale (os) erreicht.

FIG 4

EP 1 059 744 A2

**Beschreibung**

In der aktuellen optischen Datenübertragungstechnologie spielen duobinär-modulierte, optische Signale eine signifikante Rolle. Dem Fachmann ist die Erzeugung duobinär-modulierter, optischer Signale mit Hilfe einer zweikanaligen Ansteuerung eines Mach-Zehnder-Modulators bekannt. Bei den bekannten Verfahren zur Duobinär-Modulation optischer Signale wird jeweils ein „Dual-Drive Mach-Zehnder-Modulator" eingesetzt, welcher zwei Ansteuerelektroden aufweist - z.B. ein Mach-Zehnder-Modulator vom Typ m2624c (Dual Drive) der Firma Lucent microelectronics. Zur Ansteuerung des Dual-Drive Mach-Zehnder-Modulators wird an die beiden Ansteuerelektroden jeweils ein ternäres bzw. duobinär-codiertes Signal herangeführt.

Mehrstufige Signale, wie z.B. ternäre bzw. duobinär-codierte Signale werden insbesondere bei Basisbandübertragungsverfahren eingesetzt. Bei der Ternär- bzw. Duobinär-Codierung wird ein binäres Eingangssignal in ein dreiwertiges Ausgangssignal umgewandelt. Dem Fachmann ist die Erzeugung ternärer bzw. duobinär-codierter Signale beispielsweise aus der Druckschrift "Datenübertragung, Nachrichtentechnik in Datenverarbeitungssystemen, Seite 114-133", Band 1, P. Bocker, Springer Verlag 1976, bekannt.

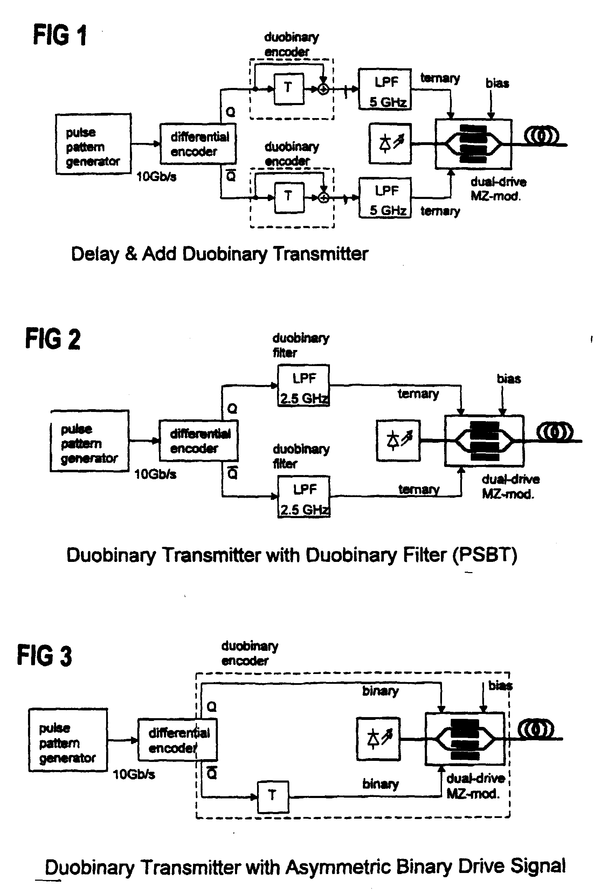

In FIG 1 bis FIG 3 sind drei allgemein bekannte Schaltungsanordnungen zur Erzeugung eines duobinär-modulierten, optischen Signals mit Hilfe eines Dual-Drive Mach-Zehnder-Modulators dargestellt. Zur Ansteuerung der beiden Ansteuerelektroden des Dual-Drive Mach-Zehnder-Modulators sind diese mit einem „Duobinär-Codierer" verbunden. Häufig ist dem Duobinär-Codierer bzw. dem Duobinärcoder ein Duobinär-Vorcodierer vorgeschaltet - in FIG 1 bis 3 als „differential encoder" bezeichnet. Bei der im Duobinär-Vorcodierer realisierten Vorcodierung wird ein eingehendes, binäres Eingangssignal - mit einer Datenübertragungsrate von beispielsweise 10 Gbit/s - in ein verwürfeltes Ausgangssignal umgewandelt. Die Vorcodierung ist notwendig, um eine anderenfalls schädliche Fehlerfortpflanzunq zu unterbinden. Gemäß FIG 1 wird das vorcodierte Signal anschließend Über einen ersten Verbindungszweig direkt einem ersten Duobinärcoder - auch als „duobinary encoder" bezeichnet - und über einen zweiten Verbindungszweig in invertierter Form einem zweiten Duobinärcoder zugeführt. In den Duobinärcodern wird das jeweils zugeführte, vorcodierte Signal - mit Hilfe eines Verzweigers, eines Zeit-Verzögerungsgliedes und eines Addierers - in ein ternäres bzw. duobinär-codiertes Signal umgewandelt. Um ein schmales Übertragungsspektrum zu erreichen, werden die störenden, jeweils im oberen Frequenzbereich der duobinär-codierten Signale enthaltenen, periodischen Spektralanteile mittels eines nachgeschalteten Tiefpaßfilters - in FIG 1 als "LPF" bezeichnet - unterdrückt. Beispielsweise ist das Tiefpaßfilter derart ausgestaltet, daß bei einer Datenübertragungsrate des duobinär-codierten Signals von 10 Gbit/s die periodischen Spektralanteile oberhalb von 5 GHz - entspricht annähernd der Hälfte der Datenübertragungsrate des codierten Signals - unterdrückt werden. Die gefilterten, duobinär-codierten Signale werden anschließend den beiden Ansteuerelektroden des Dual-Drive Mach-Zehnder-Modulators zugeführt. Die Duobinär-Modulation eines optischen Signals mittels Duobinärcoder wird auch als "Delay & Add Duo-binary Transmitter" bezeichnet.

Die Funktion eines Duobinärcoders in Verbindung mit dem nachgeschalteten Tiefpaßfilter kann auch als digitales, nichtrekursives Filter mit Tiefpaßverhalten aufgefaßt werden. Der Betrag der Übertragungsfunktion der in FIG 1 dargestellten Anordnung weist dabei im Frequenzbereich von 0 bis 5 GHz einen cosinus-förmig abfallenden Verlauf auf den Wert "0" auf. Basierend auf diesem Frequenzverlauf kann die Funktion des Duobinärcoders mit nachgeschaltetem Tiefpaß alternativ auch durch einen einzigen Tiefpaß - auch als Duobinärfilter bezeichnet - mit entsprechender Tiepaßcharakteristik realisiert werden, beispielsweise mit 3 dB Abfall bei ca. 2,5 GHz. Die darauf basierende Duobinär-Modulation des optischen Signals - in der Literatur auch als „Phase Shaped Binary Transmission" bezeichnet, ist in FIG 2 dargestellt.

Gemäß einer in FIG 3 dargestellten, dritten Schaltungsvariante wird die im Duobinärcoder realisierte Addition alternativ im Mach-Zehnder-Modulator durchgeführt. Diese Schaltungsvariante - in FIG 3 als "Duobinary Transmitter with Asymmetric Binary Drive Signal" bezeichnet - hat starke Leistungseinbußen zur Folge, da der Mach-Zehnder-Modulator bei dieser Schaltungsanordnung nicht chirpfrei arbeitet, d.h. es wird eine unerwünschte, zusätzliche Phasenmodulation des optischen Signals verursacht.

Die Realisierung einer der in FIG 1 bis 3 dargestellten Schaltungsanordnungen zur duobinären Modulation eines optischen Signals und insbesondere die Realisierung der auf hohe Datenübertragungsraten - z.B. 10 Gbit/s - abgestimmten Vorcodierer, Duobinärcoder und Tiefpaßfilter ist mit erheblichen technischen und somit wirtschaftlichen Aufwand verbunden.

Der Erfindung liegt die Aufgabe zugrunde, den wirtschaftlichen Aufwand zur Realisierung einer mehrstufigen Modulation eines optischen Signals zu reduzieren. Die Aufgabe wird durch eine Anordnung gemäß dem Oberbegriff des Patentanspruchs 1 durch dessen kennzeichnende Merkmale gelöst.

Bei der erfindungsgemäßen Anordnung zur Modulierung eines optischen Signals mit Hilfe eines Mach-Zehnder Modulators ist dieser mit einem Codierer zur Umwandlung eines eingehenden, binären Eingangssignal in ein mehrstufiges Signal verbunden. Der wesentliche Aspekt der erfindungsgemäßen Anordnung besteht darin, daß der Mach-Zehnder Modulator als einen Steuereingang aufweisender Single-Drive Mach-Zehnder Modulator ausgestaltet ist. Der Codierer ist über einen Ausgang mit dem Steuereingang des Single-Drive Mach-Zehnder Modulators verbunden, wobei das optische Signal in Abhängigkeit von dem mehrstufigen Signal mehrstufig moduliert wird.

Der wesentliche Vorteil der erfindungsgemäßen Anordnung besteht darin, daß durch die Realisierung einer mehrstufigen Modulation eines optischen Signals mittels einkanaliger Ansteuerung eines den Push-Pull-Betrieb mit einer Ansteuerelektrode realisierenden Single-Drive Mach-Zehnder Modulators der hardwaretechnische Aufwand bekannter Schaltungen annähernd halbiert wird. Der Single-Drive Mach-Zehnder Modulator weist nur eine Ansteuerelektrode auf und ist intern so verschaltet, daß an den beiden die Modulation des optischen Signals steuernden Wellenleiter-Armen gegenphasige Spannungen anliegen - auch als "Push-Pull-Betrieb" bezeichnet. Die für die Ansteuerung des Mach-Zehnder-Modulators erforderlichen, elektrischen Komponenten, wie z.B. Vorcodierer, Duobinärcoder und Filter, sind insbesondere bei Verwendung bei hohen Datenübertragungsraten mit einem erheblichen Kostenfaktor verbunden. Vorteilhaft kann durch die Halbierung des Hardwareaufwands der wirtschaftliche Aufwand zur Realisierung von Schaltungen zur mehrstufigen Modulation optischer Signale erheblich reduziert werden. Desweiteren wird durch die erfindungsgemäße, einkanalige Ansteuerung des Mach-Zehnder-Modulators das bei der bekannten zweikanaligen Ansteuerung auftretende Problem der unerwünschten, zusätzlichen Phasenmodulation des optischen Signals - auch als "Chirp" bezeichnet - umgangen. Das Auftreten von "Chirp" kann bei Dual-Drive Mach-Zehnder Modulatoren nur vermieden werden, wenn beide Ansteuerkanäle des Mach-Zehnder Modulators mit den exakt gleichen aber gegenphasigen Signalen beaufschlagt werden, was jedoch einen erhöhten technischen Aufwand erfordert. Da die exakte, gegenphasige Ansteuerung bei Verwendung eines Single-Drive Mach-Zehnder-Modulators - bedingt durch die interne Verschaltung - gegeben ist, kann vorteilhaft der technische Aufwand weiter minimiert werden.

Weitere vorteilhafte Ausgestaltungen des erfindungsgemäßen Verfahrens sind den weiteren Ansprüchen zu entnehmen.

Im folgenden wird die erfindungsgemäße Anordnung anhand zweier Zeichnungen näher erläutert. Dabei zeigen:

FIG 4    die Realisierung einer Duobinär-Modulation eines optischen Signals mittels einkanaliger Ansteuerung eines Single-Drive Mach-Zehnder-Modulators basierend auf einem Duobinärcoder, und

FIG 5    die Realisierung einer Duobinär-Modulation eines optischen Signals mittels einkanaliger Ansteuerung eines Single-Drive Mach-Zehnder-Modulators basierend auf einem Duobinärfilter mit entsprechend abgestimmten Tiefpaß-Eigenschaften.

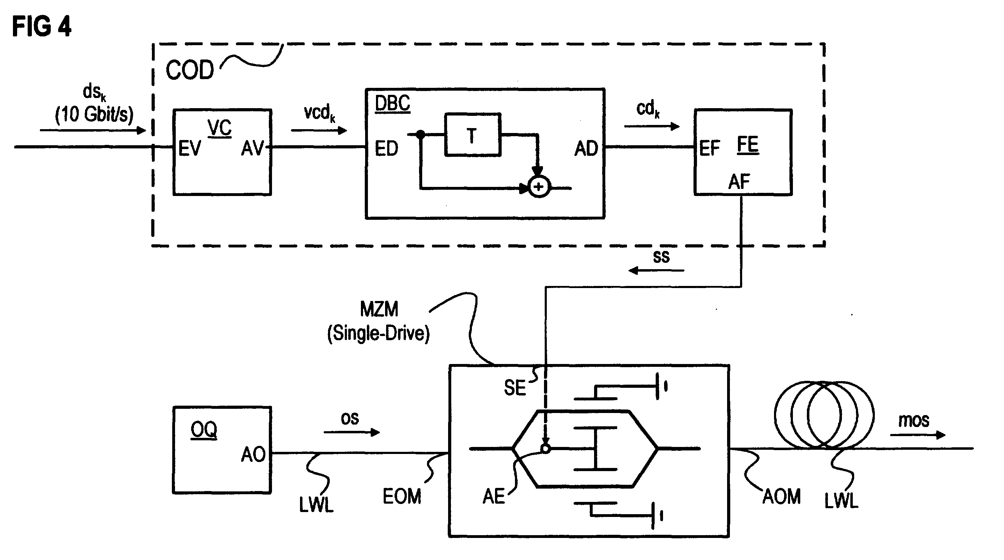

FIG 4 zeigt in einem Blockschaltbild eine Schaltungsanordnung zur Realisierung einer Duobinär-Modulation eines optischen Signals mit Hilfe eines den Push-Pull-Betrieb mit einer Ansteuerelektrode realisierenden Single-Drive Mach-Zehnder-Modulators MZM. Der Single-Drive Mach-Zehnder-Modulator MZM weist einen optischen Eingang EOM auf, an welchen über einen optischen Ausgang AO und einen Lichtwellenleiter LWL, eine Lichtquelle OQ - beispielsweise eine Laserdiode - angeschlossen ist. Über einen optischen Ausgang AOM ist der Mach-Zehnder-Modulator MZM über einen weiteren Lichtwellenleiter LWL an ein nicht dargestelltes, optisches Kommunikationsnetz angeschlossen. Die Ansteuerelektrode AE des Mach-Zehnder-Modulators MZM ist über einen Steuereingang SE des Mach-Zehnder-Modulators MZM und eine Verbindungsleitung mit einem Ausgang AF einer Tiefpaß-Eigenschaften aufweisenden Filtereinheit FE verbunden, welche wiederum über einen Eingang EF an einen Ausgang AD eines als Duobinärcoder DBC ausgestalteten Mehrstufen-Codierer angeschlossen ist. Im Duobinärcoder DBC sind die dem Fachmann bekannten, für die Durchführung einer mehrstufigen Duobinär-Codierung erforderlichen elektrischen Komponenten - z.B. ein Verzweiger, ein Zeit-Verzögerungselement T und ein Summierer - angeordnet. An einen Eingang ED des Duobinärcoders DBC ist ein Ausgang AV eines Vorcodierers VC herangeführt. Durch die Kombination des Vorcodierers VC in Verbindung mit dem Duobinärcoder DBC und der nachgeschalteten Filtereinheit FE ist die Funktion eines Duobinär-Codierers zur Umwandlung eines binären Eingangssignals in ein ternäres, duobinär-codiertes Ausgangssignal realisiert - in FIG 4 durch ein strichliertes Rechteck COD gekennzeichnet.

Ein an einem Eingang EV des Vorcodierers VC anliegendes, binäres Eingangssignal $ds_k$ - beispielsweise durch einen nicht dargestellten, binären Codegenerator mit einer Datenübertragungsrate von 10 Gbit/s erzeugt - wird durch im Vorcodierer VC angeordnete und nicht näher beschriebene Schaltmittel für die nachfolgende Duobinär-Codierung entsprechend vorcodiert. Als Beispiel für die im Vorcodierer VC realisierte Vorcodierung des binären Eingangssignals $ds_k$ sei die Exklusiv-ODER-Verknüpfung des invertierten, binären Eingangssignals $ds_k$ mit dem um 1 Bit verzögerten Ergebnis dieser Operation gemäß der Verknüpfungsvorschrift

$$vcd_k = ds_k' = \overline{ds_k} \oplus ds_{k-1}'$$

genannt. Das vorcodierte Signal $vcd_k$ wird anschließend an den Eingang ED des Duobinärcoders DBC weitergeleitet. Im Duobinärcoder DBC wird das vorcodierte Signal $vcd_k$ in ein duobinär-codiertes Ausgangssignal $cd_k$ umgewandelt, welches anschließend durch den in der Filtereinheit FE angeordneten Tiefpaß in der Bandbreite begrenzt wird. Das am Ausgang AF der Filtereinheit FE anliegende, bandbreitenbegrenzte, duobinär-codierte Signal wird anschließend als Steuersignal ss an den Steuereingang SE des Single-Drive Mach-Zehnder-Modulators MZM weitergeleitet. In Abhängigkeit des an der Ansteuerelektrode AE anliegenden Steuersignals ss wird das von der Lichtquelle OQ an den Mach-Zehnder-Modulator MZM übermittelte, optische Signal os duobinär-moduliert und als duobinär-moduliertes, optische Signal mos über den Ausgang AOM des Mach-Zehnder-Modulators MZM an den Lichtwellenleiter LWL weitergeleitet.

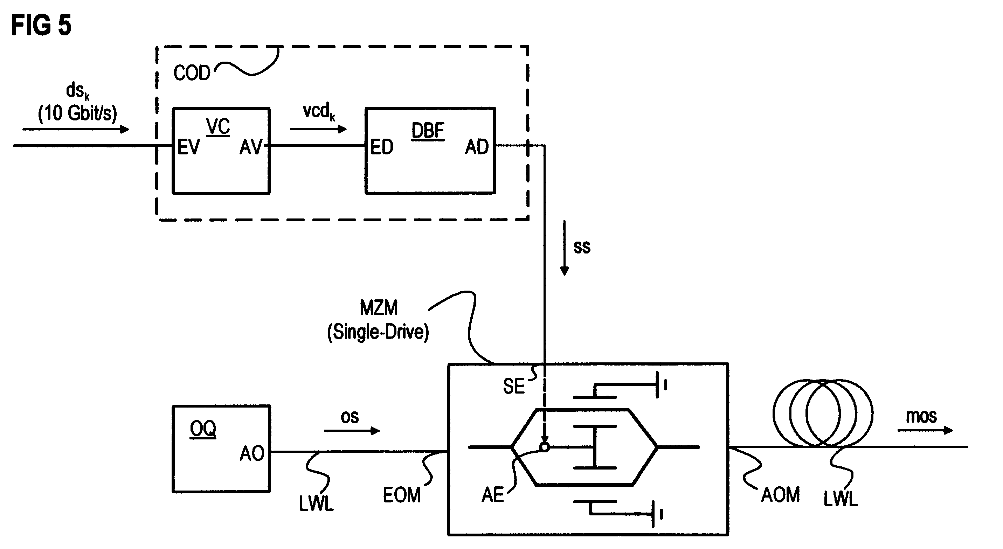

In FIG 5 ist eine Ausgestaltungsvariante der in FIG 4 dargestellten Schaltungsanordnung zur Duobinär-Modulation des optischen Signals os dargestellt, bei welcher anstelle des in FIG 4 dargestellten Duobinärcoders DBC und der Filtereinheit FE ein Duobinärfilter DBF mit entsprechenden Tiefpaßeigenschatten zur Ansteuerung des Single-Drive Mach-Zehnder Modulators MZM eingesetzt wird. Der Frequenzverlauf des Duobiärfilters DBF ist dabei an die Übertragungsfunktion des in FIG 4 dargestellten Duobinärcoders DBC in Verbindung mit der Filtereinheit FE angepaßt. In diesem Ausführungsbeispiel weist die Übertragungsfunktion des Duobinärfilters DBF im Frequenzbereich von 0 bis 5 GHz einen cosinus-förmig abfallenden Verlauf mit einem 3 dB-Abfall bei 2,5 GHz auf. Durch die Kombination des Vorcodierers VC in Verbindung mit dem Duobinärfilter DBF ist die Funktion des Duobinärcodierers zur Umwandlung des binären Eingangssignals $ds_k$ in das ternäres, duobinär-codierte Ausgangssignal ss realisiert - durch ein strichliertes Rechteck COD gekennzeichnet.

Durch geeignet gewählte, dem Vorcodierer VC und dem Duobinärcoder DBC bzw. dem Duobinärfilter DBF zugeführte Ansteuerspannungen - nicht dargestellt - weisen die erzeugten, duobinär-codierten Steuersignale ss die Werte „+1", „0", „-1" auf. Beispiele für geeignete Werte für die Ansteuerspannungen sind „0", „$U_X$", „$2U_X$" oder - mit geeigneter Vorspannung im MachZehnder-Modulator - die Werte „-$U_X$", „0", „+$U_X$". Vorteilhaft können die in FIG 4 und in FIG 5 dargestellten Schaltungsanordnungen "chirp-frei" betrieben werden. Der benötigte Spannungshub zur Ansteuerung des Single-Drive Mach-Zehnder-Modulators MZM ist nicht größer als beim Dual-Drive Mach-Zehnder-Modulator.

Es sei angemerkt, daß zur Ansteuerung des Single-Drive MachZehnder Modulators MZM jede Art von im Rahmen eines Partial-Response-Codierungsverfahrens - bzw. mit Hilfe eines Partial-Response Filters - erzeugten, mehrstufigen Signalen ss geeignet ist. Die im Rahmen eines Partial-Response-Codierungsverfahrens erzeugten, mehrstufen Signale ss werden auch als pseudo-mehrstufige Signale bezeichnet. Die Art der Codierung ist dabei durch die Ausgestaltung des Partial-Response Filters, d.h. durch die Anzahl und die Auswahl der Werte der Koeffizienten des Partial-Response Filters bestimmt. So wird beispielsweise durch die Auswahl von Koeffizienten mit den Werten "+1" und "+1" eine Duobinär-Codierung und durch die Auswahl von Koeffizienten mit den Werten "+1" und "-1" eine AMI-Codierung realisiert. Eine weitere Möglichkeit der Codierung stellt die Auswahl von Koeffizienten des Partial-Response Filters mit den Werten "+1", "0" und "-1" dar, wodurch eine als "modifizierte duobinäre Codierung" bezeichnete Codierung realisiert wird. Die genannten, mit Hilfe des Partial-Response-Codierungsverfahrens erzeugten, mehrstufigen Signale können dem Single-Drive Mach-Zehnder Modulator MZM zur mehrstufigen Modulation des optischen Signals os - auch als Partial-Response-Modulation bezeichnet - zugeführt werden.

**Patentansprüche**

1. Anordnung zur Modulierung eines optischen Signals (os) mit Hilfe eines Mach-Zehnder Modulators (MZM), mit einen mit dem Mach-Zehnder Modulator (MZM) verbunden Codierer (COD) zur Umwandlung eines binären Eingangssignals ($ds_k$) in ein mehrstufiges Signal ($cd_k$, ss), **dadurch gekennzeichnet,**

   - daß der Mach-Zehnder Modulator (MZM) als einen Steuereingang (SE) aufweisender Single-Drive Mach-Zehnder Modulator ausgestaltet ist,
   - daß der Codierer (COD) über einen Ausgang (AF, AD) mit dem Steuereingang (SE) des Single-Drive Mach-Zehnder Modulator (MZM) verbunden ist, wobei das optische Signal (os) in Abhängigkeit von dem mehrstufigen Signal (ss) mehrstufig moduliert wird.

2. Anordnung nach Anspruch 1, **dadurch gekennzeichnet,** daß der Codierer (COD) derart ausgestaltet ist, daß das binäre Eingangssignal ($ds_k$) gemäß einem Par-tial-Response-Codierverfahren in das mehrstufige Signal (ss) umgewandelt wird.

3. Anordnung nach Anspruch 1 oder 2, **dadurch gekennzeichnet**, daß im Codierer (COD)

   - ein Vorcodierer (VC) zur Vorcodierung des binären Eingangssignals ($ds_k$),
   - ein Mehrstufen-Codierer (DBC) zur Umwand-lung des vorcodierten Signals ($vcd_k$) in ein mehrstufiges Signal ($cd_k$), und
   - ein Tiefpaß-Filter (FE) zur Tiefpaßfilterung des mehrstufigen Signals ($cd_k$)

   vorgesehen ist.

4. Anordnung nach Anspruch 1 oder 2, **dadurch gekennzeichnet**,

daß im Codierer (COD)

- ein Vorcodierer (VC) zur Vorcodierung des binären Eingangssignals ($ds_k$), und
- ein Filter (DBF) mit Tiefpaß-Eigenschaften zur Umwandlung des vorcodierten Signals ($vcd_k$) in das mehrstufige Signal (ss),

vorgesehen sind.

**5.** Anordnung nach einem der Ansprüche 2 bis 4, **dadurch gekennzeichnet**, daß der Codierer (COD) derart ausgestaltet ist, daß das binäre Eingangssignal ($ds_k$) in ein ternäres Signal (ss) umgewandelt wird.

**6.** Anordnung nach Anspruch 5, **dadurch gekennzeichnet,** daß der Codierer (COD) als Duobinär-Codierer zur Umwandlung des binären Eingangssignals ($ds_k$) in ein duobinär-codiertes Ausgangssignal (ss) ausgestaltet ist.

**7.** Anordnung nach Anspruch 6, **dadurch gekennzeichnet,** daß bei einem als Duobinär-Codierer ausgestalteten Codierer (COD) das Filter (DBF) als Duobinärfilter mit Tiefpaß-Eigenschafften zur Umwandlung des vorcodierten Signals ($vcd_k$) in das duobinär-codierte Signal (ss) ausgestaltet ist.

**8.** Anordnung nach Anspruch 5, **dadurch gekennzeichnet,** daß der Codierer (COD) als AMI-Codierer zur Umwandlung des binären Eingangssignals ($ds_k$) in ein AMI-codiertes Ausgangssignal (ss) ausgestaltet ist.

**FIG 1**

Delay & Add Duobinary Transmitter

**FIG 2**

Duobinary Transmitter with Duobinary Filter (PSBT)

**FIG 3**

Duobinary Transmitter with Asymmetric Binary Drive Signal

**FIG 4**

EP 1 059 744 A2

**FIG 5**

EP 1 059 744 A2